# EUROPEAN PATENT APPLICATION

(11) **EP 4 464 813 A1**
(43) Date of publication of application: **20.11.2024**
(21) Application number: 22920501.8
(22) Date of filing: 06.12.2022
(51) Int. Cl.: C23C 2/06, C21D 1/18, C21D 9/00, C22C 18/00, C22C 21/02, C22C 38/00, C22C 38/04

(54) **HOT STAMP MOLDED ARTICLE**

(30) Priority: 13.01.2022 JP 2022003723
(71) Applicant: NIPPON STEEL CORPORATION, Chiyoda-ku Tokyo 100-8071 (JP)
(72) Inventor: HAYASHIDA, Shota, Tokyo 100-8071 (JP); MITSUNOBU, Takuya, Tokyo 100-8071 (JP); TAKEBAYASHI, Hiroshi, Tokyo 100-8071 (JP)
(74) Representative: Vossius & Partner Patentanwälte Rechtsanwälte mbB
(86) International application number: PCT/JP2022/044888
(87) International publication number: WO 2023/135981

(57) **Abstract**

This hot-stamped product includes a base steel and a plated layer formed on a surface of the base steel, and the plated layer has a chemical composition containing, in mass%, Sc: 0.000010 to 3.0%, Fe: more than 15.0% and 95.0% or less, Al: 0 to 80.0%, and Si: 0 to 20.0%, and Mg, Ca, La, Ce, Y, Cr, Ti, Ni, Co, V, Nb, Cu, Mn, Sr, Sb, Pb, B, Li, Zr, Mo, W, Ag, P, Sn, Bi, and In at a total amount of 0% to 5.0%, and a remainder: 5.0% or more of Zn, and impurities, and includes an η-Zn phase near a surface of the plated layer.

## Description

### [Technical Field of the Invention]

The present invention relates to a hot-stamped product.

The present application claims priority based on Japanese Patent Application No. 2022-003723 filed in Japan on January 13, 2022, the contents of which are incorporated herein by reference.

### [Related Art]

In recent years, suppression of chemical fuel consumption is required for environmental protection and global warming prevention. For example, an automobile as a movement unit indispensable for daily life and activities is no exception to such a request. In response to such a request, for example, improvement of fuel efficiency by vehicle body weight reduction and the like has been studied in automobiles. Most of the structure of an automobile is formed of iron, particularly a steel sheet, and therefore thinning the steel sheet to reduce the weight is highly effective for weight reduction of the vehicle body. However, if the thickness of the steel sheet is simply thinned to reduce the weight of the steel sheet, the strength of the structure is reduced to cause a concern of safety reduction. Therefore, for thinning the thickness of the steel sheet, an increase in the mechanical strength of the steel sheet to be used is required to prevent reduction in the strength of the structure.

Therefore, a steel sheet has been studied and developed in which the mechanical strength of the steel sheet is increased and thus the mechanical strength can be maintained or increased even if the steel sheet is thinner than a previously used steel sheet. Such a steel sheet is required not only in the automobile manufacturing industry but also in various manufacturing industries.

A material having high mechanical strength generally tends to have low shape fixability in forming such as bending, and in the case of processing into a complicated shape, processing itself becomes difficult. Examples of a method for solving the problem of formability include so-called "hot-pressing methods (a hot-stamping method, a high temperature pressing method, or a die quenching method)". In these hot-pressing methods, a material to be formed is once heated to a high temperature, and the material softened by the heating is pressed and formed, and cooled after or simultaneously with the forming.

In these hot-pressing methods, a material is once heated to a high temperature and softened, and pressed in a state where the material is softened, so that the material can be easily pressed. Therefore, by the hot pressing, a press-formed article having both good shape fixability and high mechanical strength is obtained. In particular, in a case where the material is steel, the mechanical strength of the press-formed article can be increased by the quenching effect due to cooling after the forming.

However, in the case of applying such a hot-pressing method to a steel sheet, for example, iron or the like on the surface is oxidized by heating to a high temperature of 800°C or higher, and thus a scale (oxide) is generated. Therefore, a step of removing the scale (descaling step) is required after the hot pressing, so that the productivity deteriorates. Furthermore, in a member or the like that requires corrosion resistance, the member surface after processing is required to be subjected to antirust treatment or metal coating, and therefore a surface cleaning step and a surface treatment step are required, so that the productivity deteriorates.

As an example of a method for suppressing such deterioration of productivity, a method in which a steel sheet before hot stamping is subjected to coating such as plating to enhance the corrosion resistance and omit a descaling step is considered. In coating on steel sheets, various materials such as organic materials and inorganic materials are generally used. Among them, zinc plating having a sacrificial protection effect is often applied to steel sheets from the viewpoints of the anticorrosion performance and steel sheet production technology.

For example, Patent Document 1 discloses a hot-pressed steel sheet member including a chemical composition containing, in mass%, C: 0.30% or more and less than 0.50%, Si: 0.01% or more and 2.0% or less, Mn: 0.5% or more and 3.5% or less, Sb: 0.001% or more and 0.020% or less, P: 0.05% or less, S: 0.01% or less, Al: 0.01% or more and 1.00% or less, and N: 0.01% or less, with the remainder being Fe and inevitable impurities; a microstructure in which the average grain size of prior austenite grains is 8 µm or less, the volume percentage of martensite is 90% or more, and the solute C content is 25% or less of the total C content; the tensile strength of 1780 MPa or more; and a surface further having an Al-plated layer or a Zn-plated layer. Patent Document 1 discloses that applying a plated layer to a surface of a steel sheet can prevent oxidation of the sheet surface caused by hot pressing and improve the corrosion resistance of the hot-pressed steel sheet member.

### [Citation List]

### [Patent Document]

[Patent Document 1]
PCT International Publication No. WO 2019/093384

### [Summary of Invention]

### [Problems to be Solved by the Invention]

As described above, oxidation of the surface of a steel sheet caused by hot pressing has been prevented and the corrosion resistance of the steel member after hot pressing has been improved by forming a plated layer containing Zn (zinc-plated layer) on the sheet surface.

When such a plated steel sheet having a zinc-plated layer is heated to a high temperature by hot stamping, welding, or the like, a part of Zn is evaporated, and the remaining Zn (zinc) is alloyed with Fe diffused from the steel sheet as a substrate. As a result of studies by the present inventors, it has been found that in a steel member (formed article) obtained through hot stamping, welding, or the like, evaporation of Zn causes deterioration of the corrosion resistance after coating.

However, Patent Document 1 does not describe a study on corrosion resistance after coating. Therefore, an object of the present invention is to provide a formed article (hot-stamped product) that is obtained through a hot stamping step using a plated steel sheet having a Zn-containing plated layer as a material and is excellent in corrosion resistance after coating.

### [Means for Solving the Problem]

The present inventors conducted studies for improving the corrosion resistance after coating in a hot-stamped product obtained by using a plated steel sheet having a Zn-containing plated layer as a material. As a result, the present inventors have found that if the plated layer contains a predetermined amount of Sc, the corrosion resistance after coating is improved.

The present invention has been made in view of the above findings. The gist of the present invention is as follows.
[1] A hot-stamped product according to an aspect of the present invention includes a base steel and a plated layer formed on a surface of the base steel, in which the plated layer has a chemical composition containing, in mass%, Sc: 0.000010 to 3.0%, Fe: more than 15.0% and 95.0% or less, Al: 0 to 80.0%, Si: 0 to 20.0%, Mg: 0 to 3.0%, Ca: 0 to 3.0%, La: 0 to 0.5%, Ce: 0 to 0.5%, Y: 0 to 0.5%, Cr: 0 to 1.0%, Ti: 0 to 1.0%, Ni: 0 to 1.0%, Co: 0 to 0.25%, V: 0 to 0.25%, Nb: 0 to 1.0%, Cu: 0 to 1.0%, Mn: 0 to 1.0%, Sr: 0 to 0.5%, Sb: 0 to 0.5%, Pb: 0 to 0.5%, B: 0 to 0.5%, Li: 0 to 1.0%, Zr: 0 to 1.0%, Mo: 0 to 1.0%, W: 0 to 0.5%, Ag: 0 to 1.0%, P: 0 to 0.5%, Sn: 0 to 1.0%, Bi: 0 to 1.0%, In: 0 to 1.0%, and a remainder: 5.0% or more of Zn, and impurities, a total amount of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In is 0 to 5.0%, and an η-Zn phase is present near a surface in the plated layer.
[2] In the hot-stamped product described in [1], the chemical composition of the plated layer may contain, in mass%, Zn: 15.0% or more and Sc: 0.00050 to 0.30%, and in a cross section of the plated layer, an area fraction of an intermetallic compound phase containing, in mass%, 3 to 40% of Sc, 3 to 50% of Zn, 3 to 50% of Fe, 0 to 50% of Al, and 0 to 30% of Si may be 0.1% or more.
[3] In the hot-stamped product described in [2], the chemical composition of the plated layer may contain, in mass%, Zn: 15.0% or more and Sc: 0.010 to 0.30%.
[4] In the hot-stamped product described in any one of [1] to [3], the chemical composition of the plated layer may contain, in mass%, Al: 30.0 to 80.0%, and a Fe₄Al₁₃ phase may be present near the surface in the plated layer.

### [Effects of the Invention]

According to the above-described aspect of the present invention, a hot-stamped product excellent in corrosion resistance after coating can be provided.

### [Brief Description of the Drawing]

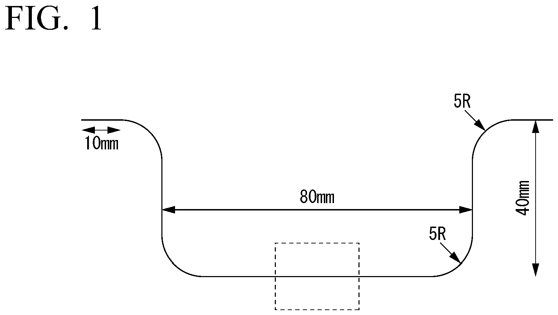

FIG. 1 is a schematic view illustrating a shape of a formed article after hat forming.

### [Embodiments of the Invention]

A hot-stamped product according to an embodiment of the present invention (hot-stamped product according to the present embodiment, sometimes simply referred to as a formed article according to the present embodiment) will be described.

The hot-stamped product according to the present embodiment includes a base steel and a plated layer formed on a surface of the base steel. In the hot-stamped product according to the present embodiment, the plated layer has a chemical composition containing, in mass%, Sc: 0.000010 to 3.0% and Fe: more than 15.0% and 95.0% or less. The chemical composition of the plated layer may contain Al: 0 to 80.0% and Si: 0 to 20.0% as necessary. Furthermore, one or more selected from Mg, Ca, La, Ce, Y, Cr, Ti, Ni, Co, V, Nb, Cu, Mn, Sr, Sb, Pb, B, Li, Zr, Mo, W, Ag, P, Sn, Bi, and In may be further contained in the range of 5.0% or less in total, as necessary. The remainder of the chemical composition is 5.0 mass% or more of Zn, and impurities.

In the hot-stamped product according to the present embodiment, the plated layer includes an η-Zn phase near the surface of the plated layer.

In the hot-stamped product according to the present embodiment, a Fe₄Al₁₃ phase is preferably further included (formed) in the plated layer (particularly, at the surface layer).

Furthermore, in a cross section of the hot-stamped product according to the present embodiment, it is preferable that an area fraction of an intermetallic compound phase containing, in mass%, 3 to 40% of Sc, 3 to 50% of Zn, 3 to 50% of Fe, 0 to 50% of Al, and 0 to 30% of Si is 0.1% or more.

Each reason for limitation will be described below.

### [Base Steel]

In the formed article according to the present embodiment, the plated layer is important, and the kind of the base steel is not particularly limited. The kind of the base steel is to be determined according to the product to which the base steel is to be applied, the required strength, the required sheet thickness, and the like. The base steel is, for example, a steel hot-stamped using a hot-rolled mild steel sheet described in JIS G3131: 2018 or a cold-rolled steel sheet described in JIS G3141: 2021 as a base sheet.

### [Plated Layer]

The formed article according to the present embodiment includes a plated layer on at least a part of the surface of the base steel. The plated layer may be formed on one surface or both surfaces of the base steel.

### <Chemical Composition>

The chemical composition of the plated layer of the formed article according to the present embodiment will be described. Hereinafter, the unit "%" of the amount of each element means mass%.

### Sc: 0.000010 to 3.0%

Sc is an important element in the plated layer of the formed article according to the present embodiment.

When a plated steel sheet having a zinc-plated layer is heated to a high temperature by hot stamping, welding, or the like, a part of zinc (Zn) is evaporated. However, if the plated layer contains 0.000010% or more of Sc, evaporation of Zn at a high temperature is suppressed. The suppression of evaporation of Zn leads to suppression of a decrease in the Zn content in a Zn-Fe alloy formed on the surface by the heating to a high temperature, and thus, the corrosion resistance after coating is improved in the hot-stamped product.

Conventionally, even if a raw material contains a trace amount of Sc as an impurity, the Sc is removed by refining. Therefore, almost no Sc is contained in a plated layer of a conventional plated steel sheet or a hot-stamped product obtained from the plated steel sheet. It has been confirmed that even in a rare case where Sc is contained as an impurity, the Sc content is 0.000004% (0.04 ppm) or less. However, the present inventors have newly found that if 0.000010% (0.10 ppm) or more of Sc is contained, evaporation of Zn is suppressed.

The mechanism of suppressing evaporation of Zn by contained Sc even in the case of heating to a high temperature is not yet clear, but in an environment containing oxygen such as the atmosphere, a thin oxide film containing a Zn oxide (and an Al oxide in a case where Al is contained) is formed on the surface of a plated layer after plating. It is assumed that when the temperature is raised by heating or the like, Sc moves into the oxide film, the oxide film is modified, and thus suppresses evaporation of Zn.

If the Sc content in the plated layer is less than 0.000010%, evaporation of Zn is not suppressed, and no effect of improving corrosion resistance after coating is obtained in the hot-stamped product. Therefore, the Sc content is 0.000010% or more. The Sc content is preferably 0.000050% or more, 0.00010% or more, 0.00025% or more, or 0.00050% or more, and more preferably 0.010% or more, 0.025% or more, 0.050% or more, or 0.10% or more.

Meanwhile, even if the Sc content is more than 3.0%, the effect is saturated, and in addition, the cost is increased. Therefore, the Sc content is 3.0% or less. The Sc content may be 1.5% or less, 0.80% or less, or 0.40% or less, as necessary. If the Sc content is more than 0.30%, initial make-up of plating bath may be difficult, and therefore the Sc content may be 0.30% or less.

### Fe: more than 15.0% and 95.0% or less

Fe is contained in the plated layer because Fe is diffused from a base sheet for plating to the plated layer during manufacture, or because Fe is diffused from a base sheet and alloyed with Zn in the plated layer when exposed to a high temperature by hot stamping, welding, or the like. In hot stamping, the Fe content in a plated layer is generally more than 15.0% due to alloying of the plated layer and a base metal. Therefore, the Fe content is more than 15.0%. The Fe content may be 18.0% or more, 20.0% or more, 23.0% or more, 26.0% or more, 30.0% or more, 35.0% or more, or 40.0% or more, as necessary.

Meanwhile, if the Fe content is more than 95.0%, the Zn content is excessively low, and the corrosion resistance after coating deteriorates. Therefore, the Fe content is 95.0% or less. The Fe content may be 90.0% or less, 85.0% or less, 80.0% or less, 75.0% or less, 70.0% or less, 65.0% or less, or 60.0% or less, as necessary.

### Al: 0 to 80.0%

Al is an element effective for improving the corrosion resistance in a plated layer containing aluminum (Al) and zinc (Zn). Al contributes to formation of an alloy layer (Al-Fe alloy layer) and is also an element effective for improving plating adhesion. Al may be contained in order to obtain the above-described effect sufficiently. In the case of obtaining the above-described effect, the Al content is preferably 5.0% or more, and preferably 10.0% or more, 15.0% or more, 20.0% or more, or 25.0% or more. Under a condition that the Al content is 30.0% or more or 35.0% or more, a Fe₄Al₁₃ phase is formed in the plated layer, and the corrosion resistance after coating, particularly the corrosion resistance to coating film swelling is further improved. Therefore, the Al content is more preferably 30.0% or more or 35.0% or more.

Meanwhile, if the Al content is more than 80.0%, the Zn content is excessively low, and the corrosion resistance after coating deteriorates. Therefore, the Al content is 80.0% or less. The Al content is preferably 70.0% or less or 65.0% or less, and more preferably 60.0% or less, 55.0% or less, or 50.0% or less.

### Si: 0 to 20.0%

Si is an element that has an effect of suppressing formation of an excessively thick alloy layer between a steel sheet and a plated layer and thus enhancing the adhesion between the steel sheet and the plated layer. In a case where Si is contained together with Mg, Si is also an element that forms a compound with Mg and contributes to improvement of the corrosion resistance after coating. Therefore, Si may be contained.

In the case of obtaining the above-described effect, the Si content is preferably 0.05% or more. The Si content is more preferably 0.1% or more, 0.2% or more, or 0.5% or more, and still more preferably 1.0% or more or 1.5% or more.

Meanwhile, in a case where the Si content is more than 20.0%, a large amount of Si is contained, in the plated steel sheet as a material, in an intermetallic compound containing Sc, so that the melting point of the intermetallic compound phase containing Sc is raised. In this case, if the plated steel sheet is exposed to a high temperature, the intermetallic compound containing Sc does not melt, and Sc does not sufficiently act.

As a result, a sufficient effect of suppressing evaporation of Zn by Sc cannot be obtained. Therefore, the Si content is 20.0% or less. From the viewpoint of workability of the plated layer, the Si content may be 15.0% or less, 10.0% or less, 7.0% or less, 5.0% or less, 3.5% or less, or 2.5% or less.

The remainder of the plated layer of the formed article according to the present embodiment may be Zn and impurities other than the above-described elements.

In order to ensure the corrosion resistance after coating, the Zn content is 5.0% or more. The amount of Zn is preferably 15.0% or more. In particular, if the Zn content is 15.0% or more, the corrosion resistance after coating, particularly the corrosion resistance to erosion of a base metal is further improved. The Zn content is preferably 7.0% or more, 10.0% or less, 15.0% or more, 18.0% or more, 21.0% or more, 25.0% or 30.0% or more. The Zn content is less than 85.0%. The Zn content may be 80.0% or less, 70.0% or less, 60.0% or less, 55.0% or less, 50.0% or less, or 45.0% or less, as necessary.

The chemical composition of the plated layer of the formed article according to the present embodiment may contain one or more selected from the group consisting of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In in the following ranges, respectively, and in the range of 5.0% or less in total for the purpose of improving various properties, or as an impurity. These elements may be not contained, and therefore the lower limit of the amount of each of these elements is 0%.

### Mg: 0 to 3.0%

Mg is an element having an effect of enhancing the corrosion resistance of the plated layer. Therefore, Mg may be contained.

Meanwhile, if the Mg content is more than 3.0%, the workability of the plated layer deteriorates. In addition, a manufacture-related problem is caused such as an increase in amount of dross generated in a plating bath. Therefore, the Mg content is 3.0% or less. The Mg content may be 2.0% or less, 1.0% or less, 0.5% or less, or 0.2% or less.

### Ca: 0 to 3.0%

Ca contained in the plated layer is an element that decreases the amount of formed dross, which is likely to be formed during plating operation as the Mg content increases, and improves plating manufacturability. Therefore, Ca may be contained.

Meanwhile, if the Ca content is high, a Ca-based intermetallic compound such as a CaZnn phase is generated in the plated layer, and the corrosion resistance deteriorates. Therefore, the Ca content is 3.0% or less. The Ca content may be 2.0% or less, 1.0% or less, 0.5% or less, or 0.2% or less.

La: 0 to 0.5%
Ce: 0 to 0.5%
Y: 0 to 0.5%

If the La content, the Ce content, and the Y content are excessive, the viscosity of the plating bath is increased, and initial make-up of plating bath itself may be difficult. Therefore, the La content, the Ce content, and the Y content are each 0.5% or less. The La content, the Ce content, and the Y content may be each 0.2% or less or 0.1% or less.

Cr: 0 to 1.0%
Ti: 0 to 1.0%
Ni: 0 to 1.0%
Co: 0 to 0.25%
V: 0 to 0.25%
Nb: 0 to 1.0%
Cu: 0 to 1.0%
Mn: 0 to 1.0%
Sr: 0 to 0.5%
Sb: 0 to 0.5%
Pb: 0 to 0.5%
B: 0 to 0.5%
Li: 0 to 1.0%
Zr: 0 to 1.0%
Mo: 0 to 1.0%
W: 0 to 0.5%
Ag: 0 to 1.0%
P: 0 to 0.5%

These elements substitute for Al, Zn, or the like in the plated layer and shift the potential to an electropositive potential and thus have an effect of improving the corrosion resistance in the acid side. Therefore, these elements may be contained.

Meanwhile, if these elements are excessive, an intermetallic compound including these elements is formed and a concern of deterioration of the corrosion resistance in the acid side and/or the alkali side is caused. Therefore, the amounts of Cr, Ti, Ni, Nb, Cu, Mn, Li, Zr, Mo, and Ag are each 1.0% or less, the amounts of Co and V are each 0.25% or less, and the amounts of Sr, Sb, Pb, B, W, and P are each 0.5% or less. The amounts of Cr, Ti, Ni, Nb, Cu, Mn, Li, Zr, Mo, and Ag may be each 0.5% or less, 0.3% or less, or 0.2% or less. The amounts of Co and V may be each 0.10% or less, 0.05% or less, or 0.03% or less. The amounts of Sr, Sb, Pb, B, W, and P may be each 0.2% or less or 0.1% or less.

### Sn: 0 to 1.0%

Sn is an element that increases the Mg elution rate in the plated layer containing Zn, Al, and Mg. Sn is also an element that forms an intermetallic compound that significantly improves the acid/alkali corrosion resistance in plating. Therefore, Sn may be contained.

Meanwhile, if the Mg elution rate is increased, the corrosion resistance of a flat portion deteriorates. Furthermore, the corrosion resistance in the acid side significantly deteriorates. Therefore, the Sn content is 1.0% or less. The Sn content may be 0.5% or less, 0.3% or less, or 0.2% or less.

Bi: 0 to 1.0%
In: 0 to 1.0%

Bi and In are each an element that forms an intermetallic compound that improves the alkali corrosion resistance. Therefore, Bi and In may be contained.

Meanwhile, if the Bi content and the In content are each more than 1.0%, the corrosion resistance in the acid side significantly deteriorates. Therefore, the Bi content and the In content are each 1.0% or less.

Even in the above-described range of the amount of each element, that is, each of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In described above, if the total amount is more than 5.0%, the corrosion resistance in the acid side and/or the alkali side deteriorates, or the viscosity of the plating bath is increased and thus initial make-up of plating bath itself may be difficult. Therefore, the total amount of these elements is 0 to 5.0%.

The chemical composition of the plated layer is measured with the following method.

First, an acid solution in which the plated layer is peeled off and dissolved with an acid containing an inhibitor that suppresses corrosion of a base metal (steel) (for example, an acid obtained by adding 1% of HIBIRON (A-6) (manufactured by Sugimura Chemical Industrial Co., Ltd.) to 10% hydrochloric acid) is obtained. Next, the obtained acid solution is measured by ICP analysis, and thus the chemical composition of the plated layer can be obtained.

### <Microstructure>

In the plated layer of the formed article according to the present embodiment, an η-Zn phase is present near the surface.

The η-Zn phase exhibits a good sacrificial protection property for Fe in the air environment. Therefore, if the plated layer (particularly the surface) includes an η-Zn phase, the corrosion resistance after coating is further improved. The η-Zn phase has an hcp structure including a trace amount of solute Fe.

In the formed article according to the present embodiment, a plated steel sheet that contains an intermetallic compound phase containing Sc and having an equivalent circle diameter (circle equivalent diameter) of 5.0 µm or less (region having an equivalent circle diameter in the range of 5.0 µm or less and containing 3.0 mass% or more of Sc) at a predetermined area fraction is used as a material steel sheet, as described below. It is assumed that in such a material steel sheet heated to a high temperature by hot stamping, welding, or the like, Sc present as an intermetallic compound phase moves into an oxide film on the surface during temperature rise due to heating or the like, and modifies the oxide film to suppress evaporation of Zn.

As the results of evaporation of Zn caused by heating to a high temperature is suppressed, an η-Zn phase is formed near the surface during subsequent cooling.

Furthermore, in the formed article according to the present embodiment, it is preferable that in a cross section, an area fraction of an intermetallic compound phase containing, in mass%, 3 to 40% of Sc, 3 to 50% of Zn, 3 to 50% of Fe, 0 to 50% of Al, and 0 to 30% of Si is 0.1% or more. In this case, the corrosion resistance after coating is further improved.

Such an intermetallic compound phase containing Sc and a relatively large amount of Zn is obtained by using, as a material steel sheet, a plated steel sheet in which the Zn content and the Sc content are increased and an intermetallic compound phase containing Sc and having an equivalent circle diameter of 5.0 µm or less as described above is included at a predetermined area fraction and thus suppressing evaporation of Zn caused by heating to a high temperature.

In the plated layer of the formed article according to the present embodiment, it is preferable that a Fe₄Al₁₃ phase is present near the surface.

The Fe₄Al₁₃ phase contributes to improvement in corrosion resistance more strongly than a Fe₂Al₅ phase, which is generally generated near the surface in a plated layer containing Fe and Al. Therefore, if the Fe₄Al₁₃ phase is included (formed) near the surface of the plated layer, the corrosion resistance after coating is further improved.

Whether the η-Zn phase and the Fe₄Al₁₃ phase are present near the surface of the plated layer is evaluated using XRD measurement. Specifically, the XRD measurement is performed by irradiating the surface of the plated layer with an X ray using a Cu tube as an X-ray generation source, and if a peak is present at a position of 42.9 to 43.6° at 2θ, it is determined that the η-Zn phase is present. If a peak is present at a position of 25.0 to 25.8° at 20, it is determined that the Fe₄Al₁₃ phase is present.

In the present embodiment, if an intensity of 1.5 times or more the baseline intensity is detected in a predetermined range of 2θ, it is determined that a peak is present.

The area fraction of the intermetallic compound phase containing Sc in the plated layer can be determined with the following method.

Five samples are collected so that a cross section in the thickness direction of the plated layer can be observed. In these samples, a visual field is set to a rectangular range of 100 µm in the thickness direction and 500 µm in the direction perpendicular to the thickness direction, and 5 visual fields in total are photographed at a magnification of 1500 times using EDS to obtain mapping images. At this time, the spot diameter is to be 1 to 10 nm, the voltage is to be 15 kV, and the current is to be 10 nA.

From the Sc element distribution image of the obtained mapping image, the area of a region containing, in mass%, 3 to 40% of Sc, 3 to 50% of Zn, 3 to 50% of Fe, 0 to 50% of Al, and 0 to 30% of Si is determined using the function "Analyze" of image analysis software "ImageJ" to determine the area fraction with respect to the observed visual field. The average of the area fraction of the five visual fields is calculated, and this is regarded as the area fraction of the intermetallic compound phase.

Resistance spot welding of zinc-plated steel sheets or resistance spot welding of a cold-rolled steel sheet and a zinc-plated steel sheet may cause a crack called a liquid metal embrittlement (LME) crack in the spot-welding portion. The LME crack is caused as follows. Zinc in the galvanized layer is melted by heat generated during resistance spot welding, the molten zinc enters a grain boundary of the metallographic structure of the weld. In this case, when a tensile stress acts a crack occurs. Occurrence of a crack requires a condition that zinc melted during welding comes into contact with a solid steel sheet and a tensile stress (strain) acts on the contact portion. A steel sheet having higher strength tends to have higher sensitivity to LME cracks.

Forming in which a zinc-containing plated steel sheet is subjected to hot stamping to form a bent portion causes a concern of LME cracks. However, in the formed article according to the present embodiment, LME cracks are suppressed. Although the detailed mechanism is unknown, it is assumed that, for example, contained Sc makes a change in impurity elements in the liquid phase Zn present during forming and LME cracks are suppressed. Therefore, in the formed article according to the present embodiment, LME cracks are preferably absent.

The presence or absence of LME cracks is determined by visually observing the external appearance of the bent portion after forming by hot stamping.

### <Adhesion Amount>

The adhesion amount per one surface of the plated layer (hereinafter, the amount simply referred to as adhesion amount means the adhesion amount per one surface) is preferably 20 to 160 g/m².

If the adhesion amount of the plated layer is less than 20 g/m², sufficient corrosion resistance may be not obtained. Meanwhile, if the adhesion amount is more than 160 g/m², the adhesion of the plated layer deteriorates, and the plating may be peeled off. The adhesion amount of the plated layer may be 30 g/m² or more, 40 g/m² or more, 50 g/m² or more, or 60 g/m² or more, and may be 140 g/m² or less, 120 g/m² or less, 100 g/m² or less, or 90 g/m² or less.

The adhesion amount can be measured with the following method.

First, a sample of 30 mm × 30 mm is collected from the formed article, and the plated layer of this sample is peeled off and dissolved with an acid containing an inhibitor that suppresses corrosion of a base metal (steel) (for example, an acid obtained by adding 1% of HIBIRON (A-6) (manufactured by Sugimura Chemical Industrial Co., Ltd.) to 10% hydrochloric acid). The weight change of the plated steel sheet after the peeling and dissolving is measured, and the adhesion amount is calculated from the result.

The shape of the formed article according to the present embodiment is not particularly limited. That is, the formed article may be a flat sheet obtained by hot stamping without deformation, or a may be a formed body formed by hot stamping. However, a formed body having a flat shape, that is, a flat sheet is easily obtained without hot working such as hot stamping, and therefore is not required to be a hot-stamped product. For this reason, examples of the shape of the formed article according to the present embodiment exclude flat shapes in principle, except for those for the purpose of testing and the like.

A person skilled in the art can easily identify whether a formed article is obtained by hot stamping, with a known method such as analyze of the microstructure, the strength, and the like of the base steel of the formed article. For example, whether a formed article is manufactured by cold working or hot stamping can be easily identified by comparative analysis of the hardness of the bent portion and the hardness of the flat part of the steel.

The thickness of the formed article according to the present embodiment is not limited, but is preferably 0.5 to 3.0 mm in consideration of application and the like in use.

### [Manufacturing Method]

An effect of the formed article according to the present embodiment is obtained regardless of the manufacturing method as long as the formed article has the above-described characteristics, and the formed article can be manufactured by hot stamping or the like on a plated steel sheet having a plated layer containing Sc and having a cross section, in the thickness direction, in which the area fraction of an intermetallic compound phase containing Sc and having an equivalent circle diameter of 5.0 µm or less is 0.1 to 10.0%.

In manufacture conditions of the formed article according to the present embodiment, the plated steel sheet as a material of the formed article is characterized, and conditions of hot stamping and the like are not limited. When hot stamping is performed, the conditions may be known conditions. For example, the plated steel sheet according to the present embodiment is to be heated to 850 to 1000°C, held for 0 to 600 seconds, and then formed and simultaneously cooled rapidly with a die.

Hereinafter, the plated steel sheet as a material will be described.

The plated steel sheet to be a material of the formed article according to the present embodiment (sometimes referred to as the plated steel sheet according to the present embodiment) includes a steel sheet, a plated layer formed on a surface of the steel sheet, and an oxide film formed on a surface of the plated layer and having a thickness of 10 nm or more. The plated layer has a chemical composition containing, in mass%, Sc: 0.000010 to 4.0%, and the chemical composition may contain Al, Fe, and Si as necessary and further contains one or more of Mg, Ca, La, Ce, Y, Cr, Ti, Ni, Nb, Cu, Mn, Sr, Sb, Pb, B, Li, Zr, Mo, Ag, and Sn as necessary in a range of 5.0% or less in total, with the remainder being Zn and impurities. In the plated steel sheet according to the present embodiment, in a cross section in the thickness direction, the area fraction of an intermetallic compound phase containing Sc and having an equivalent circle diameter of 5.0 µm or less is 0.1 to 10.0%.

### [Steel Sheet]

The steel sheet (base sheet for plating) included in the plated steel sheet according to the present embodiment is not particularly limited. The steel sheet is to be determined according to the product to which the steel sheet is to be applied, the required strength, the required sheet thickness, and the like. For example, a hot-rolled mild steel sheet described in JIS G3131: 2018 or a cold-rolled steel sheet described in JIS G3141: 2021 can be used.

### [Plated Layer]

The plated steel sheet according to the present embodiment includes a plated layer on at least a part of the surface of the steel sheet. The plated layer may be formed on one surface or both surfaces of the steel sheet. The plated layer becomes a plated layer of the formed article according to the present embodiment through hot stamping or the like.

### <Chemical Composition>

The chemical composition of the plated layer of the plated steel sheet according to the present embodiment will be described. Hereinafter, the unit "%" of the amount of each element means mass%.

### Sc: 0.000010 to 4.0%

If the Sc content in the plated layer is less than 0.000010%, no effect of suppressing evaporation of Zn is obtained. Therefore, the Sc content is 0.000010% or more. The Sc content is preferably 0.00050% or more, and more preferably 0.010% or more.

Meanwhile, even if the Sc content is more than 4.0%, the effect is saturated, and in addition, the cost is increased. Therefore, the Sc content is 4.0% or less. If the Sc content is more than 0.30%, initial make-up of plating bath may be difficult, and therefore the Sc content may be 0.30% or less.

### Al: 0 to 93.0%

Al is an element effective for improving the corrosion resistance in a plated layer containing aluminum (Al) and zinc (Zn). Al contributes to formation of an alloy layer (A1-Fe alloy layer) and is also an element effective for improving plating adhesion. Al may be contained in order to obtain the above-described effect sufficiently. In the case of obtaining the above-described effect, the Al content is preferably 5.0% or more, and preferably 10.0% or more. Al is also an element that forms a strong oxide film on a surface of the plated layer and has an effect of suppressing evaporation of Zn. In the case of obtaining this effect, the Al content is preferably 19.0% or more.

Meanwhile, if the Al content is more than 93.0%, the Zn content is excessively low, and the corrosion resistance after coating deteriorates. Therefore, the Al content is 93.0% or less. The Al content is preferably 90.0% or less.

### Fe: 0 to 15.0%

Fe may be diffused from a base sheet for plating to a plated layer during manufacture and thus may be contained in the plated layer. In particular in the case of hot-dip plating, Fe may be contained at a content up to 15.0%, and if the Fe content is 15.0% or less, the influence on the corrosion resistance after coating is small. Therefore, the Fe content is 15.0% or less.

### Si: 0 to 20.0%

In formation of a plated layer on a steel sheet, Si is an element that has an effect of suppressing formation of an excessively thick alloy layer between the steel sheet and the plated layer and thus enhancing the adhesion between the steel sheet and the plated layer. In a case where Si is contained together with Mg, Si is also an element that forms a compound with Mg to contribute to improvement of the corrosion resistance after coating. Therefore, Si may be contained.

In the case of obtaining the above-described effect, the Si content is preferably 0.05% or more. The Si content is more preferably 1.0% or more.

Meanwhile, if the Si content is more than 20.0%, a large amount of Si is contained in an intermetallic compound containing Sc, so that the melting point of the intermetallic compound phase containing Sc is raised. In this case, even if the plated steel sheet is exposed to a high temperature, the intermetallic compound containing Sc does not melt, and Sc does not sufficiently act on Zn. As a result, a sufficient effect of suppressing evaporation of Zn by Sc cannot be obtained. Therefore, the Si content is 20.0% or less. From the viewpoint of workability of the plated layer, the Si content may be 10.0% or less.

The remainder of the plated layer of the plated steel sheet according to the present embodiment may be Zn and impurities other than the above-described elements. However, one or more selected from the group consisting of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In may be contained for the purpose of improving various properties, or as an impurity. These elements may be not contained, and therefore the lower limit is 0%. The Zn content is 7.0% or more.

The preferred amounts of these elements and the reason for limitation thereof are the same as those described for the hot-stamped product, and therefore are omitted.

The chemical composition of the plated steel sheet as a material is to be selected, after advanced examination of the relation between the chemical composition of the plated steel sheet as a material and the chemical composition of the plated layer of the hot-stamped product after hot stamping, within the above range so as to be the chemical composition of the target plated layer in the hot-stamped product.

The chemical composition of the plated layer is measured with the following method.

First, an acid solution in which the plated layer is peeled off and dissolved with an acid containing an inhibitor that suppresses corrosion of a base metal (steel) (for example, an acid obtained by adding 1% of HIBIRON (A-6) (manufactured by Sugimura Chemical Industrial Co., Ltd.) to 10% hydrochloric acid) is obtained. Next, the obtained acid solution is measured by ICP analysis, and thus the chemical composition of the plated layer can be obtained.

### <Microstructure>

In a cross section in the thickness direction of the plated layer of the plated steel sheet (material steel sheet) according to the present embodiment, the area fraction of an intermetallic compound phase containing Sc and having an equivalent circle diameter of 5.0 µm or less is 0.1 to 10.0%. The area fraction of the intermetallic compound phase containing Sc and having an equivalent circle diameter of 5.0 µm or less is preferably 1.0 to 10.0%.

The intermetallic compound phase having an equivalent circle diameter of 5.0 µm or less can be in contact with the surrounding η-Zn phase, and acts to suppress evaporation of Zn more effectively than an intermetallic compound phase solute in an α-Al phase or an intermetallic compound phase having a large equivalent circle diameter. If the area fraction of the intermetallic compound phase containing Sc and having an equivalent circle diameter of 5.0 µm or less is 0.1% or more, the above-described effect can be sufficiently obtained. The area fraction of the intermetallic compound phase containing Sc and having an equivalent circle diameter of 5.0 µm or less is more preferably 1.0% or more.

Meanwhile, in order that the area fraction of the intermetallic compound phase containing Sc and having an equivalent circle diameter of 5.0 µm or less is more than 10.0%, it is necessary to contain more than 4.0% of Sc, and the cost is increased. Therefore, the area fraction of the intermetallic compound phase containing Sc and having an equivalent circle diameter of 5.0 µm or less is preferably 10.0% or less. The lower limit of the equivalent circle diameter of the target intermetallic compound phase is not limited, but the target is preferably an intermetallic compound phase of 0.1 µm or more from the viewpoint of measurement accuracy.

The area fraction of the intermetallic compound phase containing Sc and having an equivalent circle diameter of 5.0 µm or less can be controlled by the Sc content and cooling conditions after plating described below.

The area fraction of the intermetallic compound phase containing Sc and having an equivalent circle diameter of 5.0 µm or less in the cross section of the plated layer can be determined with the following method.

Five samples are collected so that a cross section in the thickness direction of the plated layer can be observed. In these samples, a visual field is set to a rectangular range of 100 µm in the thickness direction and 500 µm in the direction perpendicular to the thickness direction, and 5 visual fields in total are photographed at a magnification of 1500 times using EDS to obtain a mapping image of each visual field. From the Sc element distribution image of this mapping image, the area fraction of the region having an equivalent circle diameter in the range of 5.0 µm or less and containing 3.0 mass% or more of Sc with respect to the observed visual field is determined using the function "Analyze" of image analysis software "ImageJ". The average of the area fraction of the five visual fields is calculated and regarded as the area fraction of the intermetallic compound phase containing Sc and having an equivalent circle diameter of 5.0 µm or less.

### <Adhesion Amount>

The adhesion amount per one surface of the plated layer is preferably 20 to 160 g/m².

If the adhesion amount of the plated layer is less than 20 g/m², sufficient corrosion resistance may be not obtained. Meanwhile, if the adhesion amount is more than 160 g/m², the adhesion of the plated layer deteriorates, and the plating may be peeled off.

The adhesion amount can be measured with the following method.

A sample of 30 mm × 30 mm is collected from the plated steel sheet, and the plated layer of this sample is peeled off and dissolved with an acid containing an inhibitor that suppresses corrosion of a base metal (steel) (for example, an acid obtained by adding 1% of HIBIRON (A-6) (manufactured by Sugimura Chemical Industrial Co., Ltd.) to 10% hydrochloric acid). The weight change of the plated steel sheet after the peeling and dissolving is measured, and the adhesion amount is calculated from the result.

### [Oxide Film]

In the plated steel sheet according to the present embodiment, an oxide film is present on a surface of the plated layer, and the oxide film has a thickness of 10 nm or more. The oxide film can suppress evaporation of Zn when the temperature of the plated steel sheet becomes high during hot stamping or the like.

If the thickness of the oxide film is less than 10 nm, evaporation of Zn cannot be suppressed, and as a result, the red rust resistance deteriorates.

The upper limit of the thickness of the oxide film is not limited, but may be 50 nm or less.

The thickness of the oxide film is determined with a method in which a highfrequency glow discharge optical emission spectrometer (GDS) is used.

Specifically, the surface of a test piece is brought into an Ar atmosphere, and in a state where glow plasma is generated, the test piece is analyzed in the depth direction while the surface is subjected to sputtering. In the glow plasma, atoms are excited to emit an emission spectrum specific to the element, and from the wavelength of the emission spectrum, the element is identified and the emission intensity of the identified element is estimated.

The data in the depth direction is estimated from the sputtering time. The relation between the sputtering time and the sputtering depth is obtained in advance using a reference sample, and thus the sputtering time is converted into the sputtering depth. The depth from the surface is defined as the sputtering depth converted from the sputtering time. The obtained emission intensity is converted to mass% with a calibration curve prepared.

According to the above, the depth from the outermost surface to the position where the O content is 5 mass% is measured. This measurement is performed at three locations, and the average of the depth to the position where the O content is 5 mass% at the three locations is regarded as the thickness of the oxide film.

The plated steel sheet according to the present embodiment can be manufactured, for example, through a step of forming a plated layer containing Sc (plated layer forming step) as described below.

### <Plated Layer Forming Step>

The method for forming a plated layer is not limited, and examples of the method include a hot-dip plating method.

A hot-dip plating method can be employed that includes (I) to (III):
(I) immersing a steel sheet (base sheet for plating) in a hot-dip plating bath containing Sc;
(II) pulling the steel sheet up from the plating bath, and controlling the adhesion amount with a wiping gas or the like; and
(III) cooling to room temperature.

### (I) Immersing in Plating Bath

A steel sheet is immersed in a hot-dip plating bath containing Sc to form a plated layer on the surface of the steel sheet. The chemical composition of the plating bath is to contain, for example, 0.000010 to 4.0% of Sc, and further contain Al, Si, Mg, Ca, La, Ce, Y, Cr, Ti, Ni, Co, V, Nb, Cu, Mn, Sr, Sb, Pb, B, Li, Zr, Mo, W, Ag, P, Sn, Bi, and In according to the chemical composition of a plated layer to be finally obtained, and the remainder is to be Zn and impurities.

The steel sheet before the immersion in the plating bath may be subjected to heat reduction treatment. For example, for a steel sheet before immersion in a plating bath, the surface of the base sheet for plating is subjected to heat reduction treatment at 800°C in an N₂-5% H₂ gas atmosphere in a furnace having an oxygen concentration of 20 ppm or less, and air-cooled with an N₂ gas, and after the temperature of the sheet for immersion reaches a bath temperature + 20°C, the steel sheet is immersed in a plating bath. The immersion time in the plating bath is preferably about 1 to 10 seconds.

### (II) Pulling up

The steel sheet after the immersion in the plating bath in (I) is pulled up from the plating bath, and the plating adhesion amount is controlled with a wiping gas such as an N₂ gas.

### (III) Cooling

The steel sheet in which the adhesion amount of the plated layer is controlled is cooled to room temperature. The average cooling rate from the bath temperature to (the bath temperature - 50°C) is set to 5 °C/sec or less, and the average cooling rate from (the bath temperature - 50°C) to 100°C is set to 20 °C/sec or more to promote formation of an intermetallic compound containing Sc and having an equivalent circle diameter of 5.0 µm or less.

If the average cooling rate from the bath temperature to (the bath temperature - 50°C) is more than 5 °C/sec, Sc is in a solute state in an α-Al phase. The Sc solute in the α-Al phase does not crystallize as an intermetallic compound phase. Therefore, the average cooling rate from the bath temperature to (the bath temperature - 50°C) is set to 5 °C/sec or less so that Sc is not solute in the α-Al phase. The average cooling rate is preferably 3 °C/sec or less.

Thereafter, Sc not solute in the α-Al phase during cooling from the bath temperature to (the bath temperature - 50°C) is concentrated in a Zn-based liquid phase and is crystallized as a fine intermetallic compound phase by cooling at an average cooling rate of 20 °C/sec or more from (the bath temperature - 50°C) to 100°C. If the average cooling rate from (the bath temperature - 50°C) to 100°C is less than 20 °C/sec, a coarse intermetallic compound is crystallized, and the number density of Sc-containing intermetallic compounds having an equivalent circle diameter of 5.0 µm or less is decreased. The average cooling rate is preferably 30 °C/sec or more.

A technique is also conventionally proposed in which an acidic solution is adhered to a surface of a plated steel sheet to form a pattern portion. Although the mechanism is unknown, in the plated steel sheet according to the present embodiment, if an acidic solution is applied, the oxide film on the surface is dissolved and thus Zn evaporation cannot be prevented, and therefore an acidic solution is not adhered. If acidic solution is not adhered, the oxide film on the surface of the plated layer has a thickness of 10 nm or more. As a result, Zn evaporation is suppressed in the hot stamping step, and the red rust resistance is improved.

### [Examples]

Hereinafter, Examples of the present invention will be described. Examples described below are merely examples of the present invention, and do not limit the present invention.

A steel sheet containing C: 0.2 mass% and Mn: 1.3 mass% and having a sheet thickness of 1.6 mm was used as a base sheet for plating. A plating bath that contained 0.00001 to 4.0 mass% of Sc and further contained Al, Si, Mg, Ca, La, Ce, Y, Cr, Ti, Ni, Co, V, Nb, Cu, Mn, Sr, Sb, Pb, B, Li, Zr, Mo, W, Ag, P, Sn, Bi, and In as necessary with the remainder being Zn and impurities, was made up .

The base sheet for plating was cut into a size of 200 mm × 100 mm, and then subjected to plating using a batch type hot-dip plating test apparatus.

At the time of forming a plated layer, the surface of the base sheet for plating before immersion in a plating bath was subjected to heat reduction treatment at 800°C in an N₂-5% H₂ gas atmosphere in a furnace having an oxygen concentration of 20 ppm or less, and air-cooled with an N₂ gas, and after the temperature of the sheet for immersion reached the bath temperature + 20°C, the base sheet was immersed in a plating bath at 400 to 700°C for 3 seconds.

After immersion in the plating bath, the steel sheet was pulled up at a pulling speed of 20 to 200 mm/sec. At the time of pulling up, the plating adhesion amount was controlled with an N₂ wiping gas.

After pulled up from the plating bath, the steel sheet was cooled from the plating bath temperature to room temperature under the conditions in Table 1. Thus, plated steel sheets No. 1 to No. 35 were manufactured.

In each step, the sheet temperature was measured using a thermocouple spot-welded to the central part of the base sheet for plating.

The area fraction of the Sc-containing intermetallic compound phase having an equivalent circle diameter of 5.0 µm or less was determined with respect to the plated steel sheet in the manner described above. Table 1 shows the results.

From the obtained plated steel sheet, a blank of 180 mm × 50 mm was collected, and this blank was subjected to heating, held for a certain period of time, and then subjected to hat forming and simultaneously cooled rapidly with a die to obtain a hot-stamped product, as hot stamping. The following three conditions were set.

Condition A: The plated steel sheet is put into a furnace at 900°C, and after the temperature of the plated steel sheet reaches the temperature in the furnace - 10°C, the plated steel sheet is held in the furnace for 100 seconds, then taken out from the furnace, and subjected to hat forming, and is rapidly cooled using a hat forming die at a temperature of about room temperature.

Condition B: The plated steel sheet is put into a furnace at 900°C, and after the temperature of the plated steel sheet reaches the temperature in the furnace - 10°C, the plated steel sheet is held in the furnace for 240 seconds, then taken out from the furnace, and subjected to hat forming, and is rapidly cooled using a hat forming die at a temperature of about room temperature.

Condition C: The temperature of the plated steel sheet is raised to 900°C by high frequency induction heating or electrical heating at an average temperature rising rate of 80 °C/sec, then the heating is stopped, and the plated steel sheet is subjected to hat forming, and is rapidly cooled using a hat forming die at a temperature of about room temperature.

The shape of the hot-stamped product after the hat forming was as shown in FIG. 1.

A sample collected from the bottom (portion surrounded by a dotted line) in the drawing was used for chemical composition, chemical composition analysis, and cross-sectional microstructure observation of the plated layer described below.

The chemical composition of the plated layer of the hot-stamped product was measured with the following method.

A sample having a size of 30 mm × 30 mm was collected from the bottom of the hat-shaped hot-stamped product, and this sample was immersed in a 10% HCl aqueous solution to which 1% of HIBIRON (A-6) was added to pickle and peel off the plated layer, and then elements eluted in the aqueous solution were subjected to ICP analysis to measure the chemical composition of the plated layer. The chemical composition of the plated layer was as shown in Table 2.

Another 30 × 30 mm sample was collected from the bottom of the hat-shaped hot-stamped product, and the surface of the plated layer was irradiated with an X-ray in the manner described above to evaluate presence or absence of an η-Zn phase and a Fe₄Al₁₃ phase in the plated layer.

Furthermore, the adhesion amount of the plated layer was determined in the manner described above.

Furthermore, in a cross section of the plated layer of the hot-stamped product, the area fraction of an intermetallic compound phase containing, in mass%, 3 to 40% of Sc, 3 to 50% of Zn, 3 to 50% of Fe, 0 to 50% of Al, and 0 to 30% of Si was determined in the manner as described above. Tables 2 and 3 show the results. The A value in Table 2 is the total amount of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In.

The corrosion resistance after coating of the obtained hot-stamped product was evaluated. As the corrosion resistance after coating, the depth of erosion of the base metal and the width of swell of the coating film were evaluated in the present example.

Specifically, a sample having a size of 80 × 50 mm was collected from the bottom of the hot-stamped product, and this sample was subjected to Zn phosphate treatment in accordance with the SD5350 system (standard by Nippon Paint Industrial Coatings Co., Ltd.). Thereafter, electrodeposition coating (PN110 POWERNICS GRAY: standard by Nippon Paint Industrial Coatings Co., Ltd.) was applied so as to have a thickness of 20 µm, and baking was performed at a baking temperature of 150°C for 20 minutes. Thereafter, the center of the sample was cut up to the base metal, and the sample was subjected to a cyclic corrosion test in accordance with the cyclic neutral salt spray test method described in 8.1 of JIS H 8502: 1999 to measure the depth of erosion of the base metal and the width of swell of the coating film from the cut portion.

For measurement of the depth of erosion of the base metal, the sample was taken out at 240 cycles, the electrodeposition coating film and the plated layer were peeled off, and then the depth of erosion of the base metal was measured using a laser displacement meter.

The evaluation result of the corrosion resistance after coating was "AAA" in a case where the depth of erosion of the base metal was less than 0.3 mm, "AA" in a case where the depth was 0.3 to less than 0.6 mm, "A" in a case where the depth was 0.6 to 1.0 mm, and "B" in a case where the depth was more than 1.0 mm.

The evaluation result of the width of swell of the coating film was "AAA" in a case where the width of swell of the coating film from the cut portion at 120 cycles was less than 0.3 mm, "AA" in a case where the width was 0.3 to less than 0.6 mm, "A" in a case where the width was 0.6 to 1.0 mm, and "B" in a case where the width was more than 1.0 mm.

Table 3 shows the results.

**[Table 1]**

| No | Material steel sheet | | | |
|---|---|---|---|---|
| | Plated layer formation condition | | Plated layer | |
| | Cooling condition | | Adhesion amount | Sc-containing intermetallic compound phase having equivalent circle diameter of 5.0 µm or less |
| | Average cooling rate (°C/sec) from bath temperature to (bath temperature - 50°C) | Average cooling rate (°C/sec) from (bath temperature - 50°C) to 100°C | (g/m²) | (Area%) |
| 1 | 5 | 20 | 60 | 0.1 |
| 2 | 5 | 20 | 45 | 0.1 |
| 3 | 5 | 20 | 62 | 0.1 |
| 4 | 5 | 20 | 59 | 0.1 |
| 5 | 5 | 20 | 62 | 0.1 |
| 6 | 5 | 20 | 67 | 0.0 |
| 7 | 5 | 20 | 47 | 0.0 |
| 8 | 5 | 20 | 51 | 0.1 |
| 9 | 10 | 10 | 51 | 0.0 |
| 10 | 5 | 20 | 83 | 0.1 |
| 11 | 5 | 20 | 33 | 0.1 |
| 12 | 5 | 20 | 70 | 0.1 |
| 13 | 5 | 20 | 145 | 0.3 |
| 14 | 5 | 10 | 145 | 0.0 |
| 15 | 5 | 20 | 59 | 0.2 |
| 16 | 5 | 20 | 70 | 0.3 |
| 17 | 5 | 20 | 70 | 0.4 |
| 18 | 5 | 20 | 41 | 0.4 |
| 19 | 5 | 20 | 63 | 1.1 |
| 20 | 5 | 20 | 41 | 1.2 |
| 21 | 5 | 20 | 80 | 1.1 |
| 22 | 5 | 20 | 22 | 1.2 |
| 23 | 5 | 20 | 67 | 0.9 |
| 24 | 5 | 20 | 77 | 2.1 |
| 25 | 5 | 20 | 82 | 2.3 |
| 26 | 5 | 20 | 41 | 2.2 |
| 27 | 5 | 20 | 40 | 2.2 |
| 28 | 10 | 20 | 60 | 0.0 |
| 29 | 5 | 20 | 60 | 2.1 |
| 30 | 5 | 20 | 78 | 2.5 |
| 31 | 5 | 20 | 71 | 0.0 |
| 32 | 5 | 20 | 71 | 4.2 |
| 33 | 5 | 20 | 67 | 5.3 |
| 34 | 5 | 20 | 60 | 4.5 |
| 35 | 5 | 20 | 62 | 6.5 |

**[Table 2]**

| No | Hot stamping condition | Product | | | | | | | | | |
|---|---|---|---|---|---|---|---|---|---|---|---|
| | | Plated layer | | | | | | | | | |
| | | Average composition (mass%) remainder: impurity | | | | | | | | | |
| | | Zn | Fe | Al | Si | Sc | Others | | | | A value |
| | | | | | | | Element 1 | (mass%) | Element 2 | (mass%) | |
| 1 | A | 1.0 | 15.0 | 84.0 | 0.0 | 0.000010 | | | | | |
| 2 | A | 5.0 | 95.0 | 0.0 | 0.0 | 0.000010 | Ni | 0.0004 | | | 0.0004 |
| 3 | A | 37.0 | 43.0 | 20.0 | 0.0 | 0.000010 | Y | 0.0002 | In | 0.001 | 0.0012 |
| 4 | B | 10.0 | 40.0 | 50.0 | 0.0 | 0.000010 | Nb | 0.001 | | | 0.001 |
| 5 | B | 5.0 | 25.0 | 70.0 | 0.0 | 0.000010 | Zr | 0.001 | | | 0.001 |
| 6 | C | 70.0 | 25.0 | 5.0 | 0.0 | 0.000000 | | | | | |
| 7 | A | 5.0 | 95.0 | 0.0 | 0.0 | 0.000000 | | | | | |
| 8 | A | 19.0 | 80.0 | 0.0 | 1.0 | 0.00010 | Mg | 0.001 | | | 0.001 |
| 9 | A | 19.0 | 80.0 | 0.0 | 1.0 | 0.00010 | | | | | |
| 10 | A | 39.0 | 26.0 | 21.0 | 14.0 | 0.00010 | | | | | |
| 11 | B | 9.9 | 41.0 | 46.0 | 3.0 | 0.00010 | Cu | 0.004 | Cr | 0.06 | 0.064 |
| 12 | B | 7.9 | 15.1 | 75.0 | 2.0 | 0.00010 | | | | | |
| 13 | A | 84.0 | 16.0 | 0.0 | 0.0 | 0.00050 | | | | | |
| 14 | A | 84.0 | 16.0 | 0.0 | 0.0 | 0.00050 | | | | | |
| 15 | B | 28.0 | 25.0 | 41.0 | 6.0 | 0.00050 | Mo | 0.001 | Mo | 0.002 | 0.003 |
| 16 | B | 17.0 | 17.0 | 66.0 | 0.0 | 0.00050 | Mn | 0.03 | | | 0.03 |
| 17 | B | 14.0 | 16.0 | 70.0 | 0.0 | 0.00050 | Ca | 0.006 | | | 0.006 |
| 18 | A | 4.0 | 96.0 | 0.0 | 0.0 | 0.00050 | | | | | |
| 19 | A | 40.0 | 18.0 | 22.0 | 20.0 | 0.010 | Sn | 0.02 | | | 0.02 |
| 20 | B | 22.0 | 23.0 | 51.0 | 4.0 | 0.010 | Co | 0.001 | | | 0.001 |
| 21 | B | 18.0 | 16.0 | 66.0 | 0.0 | 0.010 | Ag | 0.001 | Pb | 0.004 | 0.005 |
| 22 | B | 7.0 | 22.0 | 71.0 | 0.0 | 0.010 | | | | | |
| 23 | A | 7.0 | 38.0 | 33.0 | 22.0 | 0.010 | | | | | |
| 24 | A | 61.9 | 21.0 | 0.0 | 17.0 | 0.10 | Ti | 0.008 | | | 0.008 |
| 25 | A | 38.9 | 25.0 | 25.0 | 11.0 | 0.10 | | | | | |
| 26 | B | 16.9 | 40.0 | 43.0 | 0.0 | 0.10 | Bi | 0.004 | P | 0.001 | 0.005 |
| 27 | C | 26.9 | 30.0 | 43.0 | 0.0 | 0.10 | Bi | 0.004 | P | 0.001 | 0.005 |
| 28 | B | 16.9 | 40.0 | 43.0 | 0.0 | 0.10 | | | | | |
| 29 | B | 16.9 | 24.0 | 59.0 | 0.0 | 0.10 | B | 0.009 | | | 0.009 |
| 30 | B | 9.9 | 20.0 | 70.0 | 0.0 | 0.10 | Sr | 0.01 | | | 0.01 |
| 31 | A | 7.0 | 30.0 | 63.0 | 0.0 | 0.000002 | | | | | |
| 32 | A | 62.7 | 20.0 | 5.0 | 12.0 | 0.30 | Ce | 0.005 | | | 0.005 |
| 33 | B | 27.7 | 26.0 | 40.0 | 6.0 | 0.30 | Li | 0.01 | Ti | 0.04 | 0.05 |
| 34 | B | 9.7 | 25.0 | 65.0 | 0.0 | 0.30 | La | 0.003 | W | 0.002 | 0.005 |
| 35 | B | 8.7 | 21.0 | 70.0 | 0.0 | 0.30 | | | | | |

**[Table 3]**

| No | Product | | | | | | Group |
|---|---|---|---|---|---|---|---|
| | Plated layer | | | | Corrosion resistance after coating | | |
| | Adhesion amount | Sc-containing intermetallic compound phase | Presence or absence of η-Zn phase | Presence or absence of Fe₄Al₁₃ phase | | | |
| | (g/m²) | (Area%) | | | Depth of erosion of base metal | Width of swell of coating film | |
| 1 | 64 | <0.1 | × | × | B | B | Comparative example |
| 2 | 81 | <0.1 | ○ | × | A | A | Invention example |
| 3 | 83 | <0.1 | ○ | × | A | A | Invention example |
| 4 | 79 | <0.1 | ○ | ○ | A | A | Invention example |
| 5 | 74 | <0.1 | ○ | ○ | A | A | Invention example |
| 6 | 80 | <0.1 | × | × | B | B | Comparative example |
| 7 | 88 | <0.1 | × | × | B | B | Comparative example |
| 8 | 87 | <0.1 | ○ | × | A | A | Invention example |
| 9 | 87 | <0.1 | × | × | B | B | Comparative example |
| 10 | 99 | <0.1 | ○ | × | A | A | Invention example |
| 11 | 44 | <0.1 | ○ | ○ | A | A | Invention example |
| 12 | 77 | <0.1 | ○ | ○ | A | A | Invention example |
| 13 | 160 | 0.2 | ○ | × | AA | A | Invention example |
| 14 | 160 | <0.1 | × | × | B | B | Comparative example |
| 15 | 70 | 0.2 | ○ | ○ | AA | AA | Invention example |
| 16 | 78 | 0.2 | ○ | ○ | AA | AA | Invention example |
| 17 | 77 | <0.1 | ○ | ○ | A | AA | Invention example |
| 18 | 74 | <0.1 | × | × | B | B | Comparative example |
| 19 | 71 | 1.0 | ○ | × | AAA | A | Invention example |
| 20 | 48 | 0.8 | ○ | ○ | AAA | AAA | Invention example |
| 21 | 88 | 0.9 | ○ | ○ | AAA | AAA | Invention example |
| 22 | 25 | <0.1 | ○ | ○ | A | AAA | Invention example |
| 23 | 88 | <0.1 | × | × | B | B | Comparative example |
| 24 | 89 | 1.9 | ○ | × | AAA | A | Invention example |
| 25 | 98 | 2.1 | ○ | × | AAA | A | Invention example |
| 26 | 55 | 2.0 | ○ | ○ | AAA | AAA | Invention example |
| 27 | 50 | 2.3 | ○ | ○ | AAA | AAA | Invention example |
| 28 | 80 | <0.1 | × | × | B | B | Comparative example |
| 29 | 70 | 1.9 | ○ | ○ | AAA | AAA | Invention example |
| 30 | 89 | <0.1 | ○ | ○ | A | AAA | Invention example |
| 31 | 88 | <0.1 | × | × | B | B | Comparative example |
| 32 | 81 | 3.8 | ○ | × | AAA | A | Invention example |
| 33 | 80 | 4.8 | ○ | ○ | AAA | AAA | Invention example |
| 34 | 70 | <0.1 | ○ | ○ | A | AAA | Invention example |
| 35 | 71 | <0.1 | ○ | ○ | A | AAA | Invention example |

As shown in Tables 1 to 3, the corrosion resistance after coating is excellent in the plated layer of plated steel sheets Nos. 2 to 5, 8, 10 to 13, 15 to 17, 19 to 22, 24 to 27, 29, 30, and 32 to 35 as invention examples in which the amount of each of elements including Sc is within a predetermined range. Furthermore, the higher the Sc content is, the more excellent the corrosion resistance after coating is. Furthermore, in a case where the Zn content in the plated layer is high, the depth of erosion of the base metal is particularly small. Furthermore, in a case where the Al content in the plated layer is high and a Fe₄Al₁₃ phase is present on the plated layer, the width of swell of the coating film is particularly small.

In these examples, LME cracks were suppressed in the bent portion of the hot-stamped product.

Meanwhile, in the plated steel sheets of Nos. 1, 6, 7, 9, 14, 18, 23, 28, and 31 as comparative examples, the corrosion resistance after coating was poor.

In the plated steel sheet of No. 1, the Al content in the plated layer was excessive, the Zn content was low, and a sufficient η-Zn phase was not formed, so that the corrosion resistance after coating deteriorated.

In the plated steel sheets of Nos. 6, 7, and 31, Sc was not contained in the plated layer or was contained at an excessively low content, and thus a sufficient η-Zn phase was not formed, so that the corrosion resistance after coating deteriorated.

In the plated steel sheet of No. 18, the Fe content in the plated layer was excessive, the Zn content was low, and thus a sufficient η-Zn phase was not formed, so that the corrosion resistance after coating deteriorated.

In the plated steel sheet of No. 23, the Si content was high, a sufficient effect of Sc was not obtained, and thus a sufficient η-Zn phase was not formed, so that the corrosion resistance after coating deteriorated.

In the plated steel sheets of Nos. 9, 14, and 28, a sufficient Sc-containing intermetallic compound phase having an equivalent circle diameter of 5.0 µm or less was not formed in the plated steel sheet as a material, and thus a sufficient η-Zn phase was not formed. As a result, the corrosion resistance after coating deteriorated.

### [Field of Industrial Application]

According to the present invention, a hot-stamped product excellent in corrosion resistance after coating can be provided. This hot-stamped product can be applied to vehicle components and the like, and has high industrial applicability.

## Claims

1. A hot-stamped product comprising:
a base steel; and
a plated layer formed on a surface of the base steel,
wherein the plated layer has a chemical composition containing, in mass%,
Sc: 0.000010 to 3.0%,
Fe: more than 15.0% and 95.0% or less,
Al: 0 to 80.0%,
Si: 0 to 20.0%,
Mg: 0 to 3.0%,
Ca: 0 to 3.0%,
La: 0 to 0.5%,
Ce: 0 to 0.5%,
Y: 0 to 0.5%,
Cr: 0 to 1.0%,
Ti: 0 to 1.0%,
Ni: 0 to 1.0%,
Co: 0 to 0.25%,
V: 0 to 0.25%,
Nb: 0 to 1.0%,
Cu: 0 to 1.0%,
Mn: 0 to 1.0%,
Sr: 0 to 0.5%,
Sb: 0 to 0.5%,
Pb: 0 to 0.5%,
B: 0 to 0.5%,
Li: 0 to 1.0%,
Zr: 0 to 1.0%,
Mo: 0 to 1.0%,
W: 0 to 0.5%,
Ag: 0 to 1.0%,
P: 0 to 0.5%,
Sn: 0 to 1.0%,
Bi: 0 to 1.0%,
In: 0 to 1.0%, and
a remainder: 5.0% or more of Zn, and impurities,
a total amount of Mg, Ca, La, Ce, Y, Cr, Ti, Ni, Co, V, Nb, Cu, Mn, Sr, Sb, Pb, B, Li, Zr, Mo, W, Ag, P, Sn, Bi, and In is 0 to 5.0%, and
an η-Zn phase is present near a surface in the plated layer.

2. The hot-stamped product according to claim 1, wherein
the chemical composition of the plated layer contains, in mass%,
Zn: 15.0% or more, and
Sc: 0.00050 to 0.30%, and
in a cross section of the plated layer, an area fraction of an intermetallic compound phase containing, in mass%, 3 to 40% of Sc, 3 to 50% of Zn, 3 to 50% of Fe, 0 to 50% of Al, and 0 to 30% of Si, is 0.1% or more.

3. The hot-stamped product according to claim 2, wherein
the chemical composition of the plated layer contains, in mass%,
Zn: 15.0% or more, and
Sc: 0.010 to 0.30%.

4. The hot-stamped product according to any one of claims 1 to 3, wherein
the chemical composition of the plated layer contains, in mass%, Al: 30.0 to 80.0%, and
a Fe₄Al₁₃ phase is present near the surface in the plated layer.
